# EUROPEAN PATENT APPLICATION

(11) **EP 3 494 923 A1**
(43) Date of publication of application: **12.06.2019**
(21) Application number: 17382839.3
(22) Date of filing: 05.12.2017
(51) Int. Cl.: A61C 13/34, A61C 13/00, A61C 8/00

(54) **ORAL CAVITY MODEL AND MANUFACTURING METHOD**

(71) Applicant: Tech Xika PTT, S.L., 25002 Lleida (ES)
(72) Inventor: Sassi, Sebastián, 25002 Lleida (ES)
(74) Representative: Carlos Hernando, Borja

(57) **Abstract**

Oral cavity model and manufacturing method relating to an oral cavity model manufactured by means of 3D printing, milling and/or sintering that incorporates the connection of a patient's dental implant and that enables it to be used without having to use traditional or digital replicas. Said oral cavity model preferably incorporates an internal channel and can also incorporate a retaining body used in some embodiments of the oral cavity model, and which has the geometry of the internal orifice or channel of the oral cavity model and an element with an internal thread (used in some embodiments) without using traditional or digital replicas. Additionally, the invention relates to a manufacturing method for oral cavity models by machining, preferably 3D printing, milling and/or sintering, which incorporate or integrate the connection of a dental implant placed in a patient without the need for replicas, whether traditional or digital.

## Description

### OBJECT OF THE INVENTION

The present invention, an oral cavity model, relates to an oral cavity model manufactured by means of 3D printing, milling and/or sintering that incorporates the connection of a patient's dental implant and that enables it to be used without having to use traditional or digital replicas. Said oral cavity model preferably incorporates an internal channel and can also incorporate a retaining body used in some embodiments of the oral cavity model, and which has the geometry of the internal orifice or channel of the oral cavity model and an element with an internal thread (used in some form of embodiment) for patients with dental implants and without using traditional or digital replicas.

Additionally, the invention relates to a manufacturing method for oral cavity models by means of 3D printing, milling and/or sintering, which incorporate or integrate the connection of a dental implant placed in a patient without the need for replicas, whether traditional or digital.

The present invention is found within the dental field and, specifically, in the field of dental implantology.

### BACKGROUND OF THE INVENTION

In the state of the art, methods are known for the implementation of customized oral cavity models of a patient, which aim to replicate the position of one or several implants arranged in the patent's mouth. The dental model or impression is the physical representation of the hard and soft tissues of the oral cavity, i.e., the representation of the upper and lower jaws of a patient's mouth or a part of the same in order to thus simulate the oral cavity or mouth of the patient and subsequently enable the design and assembly of different elements on the mouth. Two techniques are mainly used in the state of the art for carrying out oral cavity models.

Traditionally, in order to reproduce a negative of the patient's oral situation and the position of the implant(s) thereof, dental models or impressions are carried out by means of impression trays (mold). This method uses impression abutments, replicas, a tray and dental impression material for generating a model. The replica is positioned in the oral cavity model and reproduces the position of the implant.

However, with the advance of CAD-CAM technology and scanners, another working technique has been developed that enables digitally designing the oral cavity model in dental Cad software from a preferably intraoral scan of the patient's mouth, so that an orifice or channel of variable geometry is designed by means of said CAD software as well as through the assistance of digital libraries. The designed oral cavity model is subsequently printed in 3D or it can be manufactured by means of milling in order to subsequently insert a digital replica into the designed orifice or channel. This technique increases the precision of the assembly by reading and scanning the patient's oral situation directly (intraoral scanning) avoiding the errors derived from the negative and positive impression in the traditional method. The positioning of the replica in the orifice or channel of the oral cavity model depends on the design of each digital replica.

Currently, the working method with digital replicas depends largely on the precision of the 3D printer used, the precision in manufacturing the digital replica and the design of the digital CAD libraries that incorporate the orifice or channel for subsequent placing of the digital replica.

Likewise, the in-depth (z-axis) positioning of the digital replica in the orifice or channel of the oral cavity model depends on the precision of the 3D printer (oral cavity model impression error), manufacturing tolerance (digital replica error) and the placing of the digital replica in the oral cavity model. On the other hand, the positioning of the digital replica in the XY plane, very important in the design of individual dental crowns, also depends on the precision of the 3D printer (oral cavity model impression error), manufacturing tolerance (digital replica error) and the placing of the digital replica in the oral cavity model.

In light of the foregoing, it is clear that in the state of the art, the methods used for the physical reproduction of oral molds with dental implants present precision problems that need to be solved.

### DESCRIPTION OF THE INVENTION

With the aim of reducing and/or eliminating the precision errors that exist in the solutions of the state of the art, the object of the present invention is an oral cavity model according to claim 1. Specifically, the invention relates to an oral cavity model preferably manufactured by means of 3D printing, milling and/or sintering, and which reproduces the oral situation of a patient with at least one dental implant, comprising at least one implant connection (implant connection must be understood as the geometric shape of the implant so that different attachments or elements or dental structures can be coupled or fastened thereto) integrated in the body itself of the oral cavity model. Implant connections can be of different types, such as external, internal, conical, lobular, etc., and the geometry of the connection varies usually depending on the implant manufacturer. Said connection is performed or carried out in the body itself of the oral cavity model. Alternative characteristics are set out in claims 2 to 6.

The oral cavity model comprises an internal channel, the geometry of which will vary according to the preferred or selected embodiment, being therefore variable depending on the requirements of the design, being able for example to be prismatic, cylindrical, cylindrical with flat drying surfaces, and cylindrical-conical, among others. Said internal channel can be separated into two parts, an upper end comprising the implant connection and a lower section located after the upper end. Said lower section may comprise an internal thread and likewise the lower section may or may not be a through hole. The objective of the internal thread is that a screw is threaded therein as if it were threaded into an implant, so that a dental attachment can be held on the oral cavity mold as if the attachment were held in the implant placed in the patient itself.

The oral cavity models according to the present invention incorporate, depending on the type of connection, an anti-rotational or rotational geometry of said connection, and which depends on whether the compatibility of the implant is internal or external.

The oral cavity model may incorporate, depending on the embodiment thereof, a retaining body, according to claim 7, which acts as an internal thread of the lower section of the internal channel since said retaining body comprises an internal orifice with an internal thread that is coaxial with the axis of the internal channel and an outer surface with a geometry that is complementary to the geometry of said internal channel.

Preferably, said retaining body comprises at least one notch, groove and/or flange on the outer surface thereof, which acts as a mechanical retaining element inside the internal channel. Likewise, it comprises at least one cut on the outer surface thereof, perpendicular to the longitudinal axis of the internal channel in order to limit the rotation of the retaining body inside the channel. The lower section of the internal channel may have a limiting surface in order to limit the depth (z) of introduction of the retaining body into the channel. The limiting surface can be flat, inclined and/or curved.

Optionally, the outer surface of the retaining body may comprise an external thread, complementary to a thread performed in the lower section of the internal channel of the oral cavity model but opposite the internal thread of the retaining body itself.

The foregoing oral cavity model is obtained according to a manufacturing process, according to claim 8, which enables the design and manufacture of customized oral cavity models incorporating the anti-rotational or rotational geometry of the implant compatibility connection (internal or external), and without having to use replicas (traditional or digital) that introduce precision errors in the oral cavity model that subsequently affect the dental prosthesis that is going to be manufactured and placed in the dental implant in the patient's mouth. Alternative characteristics are set out in claims 9 to 13.

Specifically, the method for manufacturing an oral cavity model that reproduces an oral situation of a patient with at least one dental implant, according to the present invention, comprises the following stages:
- Obtaining a digital file of the patient's oral situation,
- Digitally designing the oral cavity model by means of a suitable computer program that comprises designing or determining the connection of the patient's dental implant and an internal channel that corresponds to the position of said implant in the patient's mouth,
- Manufacturing the oral cavity model which comprises manufacturing the implant connection,
- Carrying out the internal channel with the longitudinal axis thereof coinciding with the longitudinal axis of the patient's dental implant, and
- Incorporating an internal thread in the internal channel for the subsequent threading of a dental attachment in the oral cavity model.

Preferably, the manufacturing of the oral cavity model will be carried out by means of 3D printing, milling and/or sintering. Likewise, the attachment is threaded by means of a screw that crosses through the attachment connected to the implant connection. The screw is threaded to the internal thread incorporated in the internal channel of the dental model.

The present invention achieves that the attachment, which is subsequently adjusted by means of a screw and without the need for a physical replica of the implant, is directly supported on the oral cavity model object of the present invention. This way, dimensional errors when manufacturing the replica are eliminated, improving the precision of the assembly. Furthermore, and thanks to the fact that the connection is incorporated in the oral cavity model, it also enables reducing errors derived from the positioning of the replica on the oral cavity model in depth (z axis), as well as laterally, on the XY plane (in anti-rotational connections) with respect to the replica assembly with a plaster model and the digital replica assembly with a printed/milled model.

The internal channel can be carried out either during the manufacturing of the oral cavity model and the implant connection, or after manufacturing the oral cavity model by using manual tools.

The internal thread of the lower section can be incorporated into the oral cavity model following different alternatives:
- by means of a thread produced in the same manufacturing process as the oral cavity model, through 3D printing, milling and/or sintering; or
- by carrying out the thread with a threading tool after manufacturing the oral cavity model; or
- by introducing a retaining body with said thread inside the retaining body itself into the internal channel of the oral cavity model.

Said internal thread will preferably comprise metrics between M1 and M3.

In the event that the thread in the internal orifice or channel is carried out by means of a tap, it can be introduced into said channel from the upper or lower end of the orifice or channel, depending on whether said internal orifice or channel is through or blind.

It should be highlighted that producing the oral cavity model does not require the use of either a traditional or a digital physical replica. Said oral cavity model shall have an internal channel the geometry and characteristics of which will vary depending on the embodiment.

Furthermore, the manufacturing method object of the present invention can comprise the following stages:
- obtaining the digital file by means of scanning, and/or
- digital design carried out by means of CAD software, and/or
- use and assistance of digital CAD libraries

### BRIEF DESCRIPTION OF THE FIGURES

The following figures are attached hereunder describing in more detail the aspects of the invention in order to achieve a better understanding thereof.
Figure 1 shows a digital representation of the scan of the oral situation of the upper jaw of a patient.
Figure 2 shows a digital representation of an oral cavity model with representations of the integrated implants.
Figure 3 shows a side view of the representations of the implants in the digital oral cavity model.
Figure 4 shows a side view of the representation of an implant, different from the previous views, in the digital oral cavity model.
Figure 5 shows a top view of a digital representation of an implant connection.
Figure 6 shows a top view of a digital representation of another implant connection.
Figure 7 shows a side view of a digital representation of an oral cavity model with representations of the previous implants.
Figure 8 shows a perspective view of a final digital representation of dental model prior to the manufacture thereof with the implant connections incorporated therein.
Figure 9 shows a detail of an embodiment of an oral cavity model manufactured by 3D printing, or milling with a cylindrical internal orifice or channel. The attachment is fastened by means of a screw on the connection, either internal or external, of the oral cavity model.
Figures 10a to 10c show different details of the phases of the machining process of the internal thread of the previously manufactured oral cavity model. The tap is introduced from the upper or lower area of the internal orifice.
Figures 11a and 11b show different phases of the working method and geometry of the internal orifice or channel of the oral cavity model in which a retaining body with and internal thread is inserted. The internal orifice or channel is made up of two areas, upper and lower, separated by a surface that delimits them.
Figures 12a, 12b and 12c show different embodiments of the retaining body with internal thread. The external geometry of the body varies and may or may not incorporate cuts and/or notches, grooves or flaps.

### PREFERRED DESCRIPTION OF THE INVENTION

The present invention enables supporting the corresponding dental attachment directly on the implant connection integrated in the oral cavity model object of the invention and adjusting it by means of a screw to the mentioned oral cavity model without having to use a physical replica. By means of this new oral cavity model and the manufacturing method thereof, the implant connection integrated into the oral cavity model is more accurate than that obtained by other existing methods. As mentioned, by means of the present invention, dimensional errors when manufacturing the replica are eliminated, improving the precision of the assembly such that, thanks to the fact that the dental implant connections are integrated or incorporated into the oral cavity model itself (manufactured by 3D printing, milling or sintering), it enables reducing the errors derived from the positioning of the replica on the oral cavity model in depth (z axis) and on the XY plane (only in anti-rotational connections) with respect to the assemblies of the state of the art made up of a replica with a plaster model and also that of a digital replica with a printed/milled model. The oral cavity model object of the present invention will thus have an internal channel, the geometry of which and method of incorporation of the internal thread will vary depending on the embodiment.

Using CAD libraries on 3D implants in the manufacturing method of the present invention enables increasing the precision of the oral cavity model. Since the use of a digital replica is not required, manufacturing tolerance and errors in the placing of the replica in the oral cavity model (Z axis) are eliminated. The oral cavity model object of the invention, designed using the library and subsequently manufactured, also incorporates or integrates the implant connection so the positioning error that exists when replicas are used in the oral cavity model (XY plane) is also eliminated.

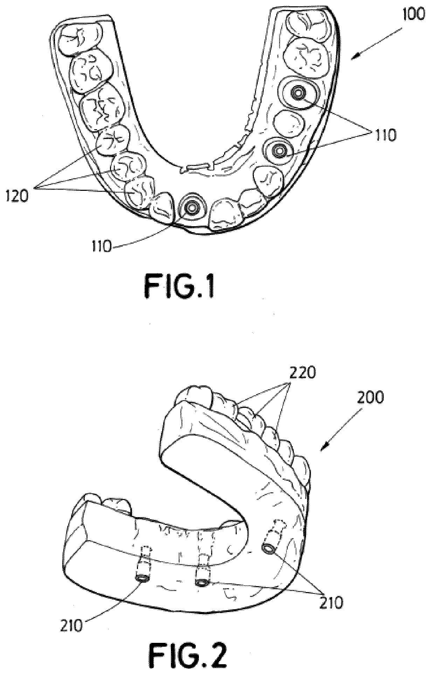

The manufacturing method of an oral cavity model according to the present invention comprises a first stage in which an digital file of the patient's oral situation is obtained, i.e., usually after a scan, a CAD image 100 of the patient's mouth is obtained. Figure 1 shows the scanned image 100 of an upper jaw with the teeth 120 of the mouth and the gaps 110 that have an implant, specifically pieces 21, 15 and 17 of the mouth.

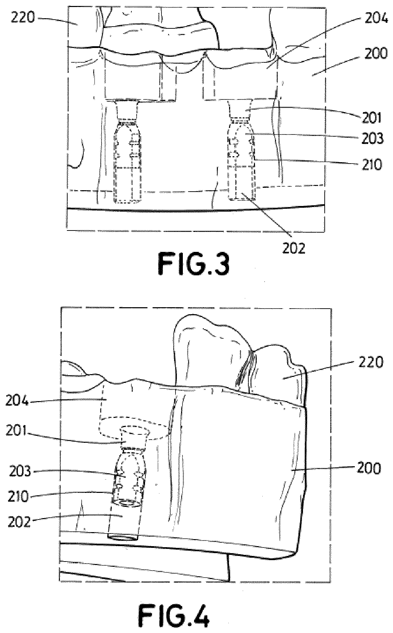

Subsequently, the oral cavity model is digitally designed by means of a suitable computer program and said design comprises determining the patient's dental implant connection and an internal channel that corresponds to the position of said implant in the patient's mouth. Specifically, the type of implants that are already arranged in the patent's mouth are chosen in the CAD library of 3D implants between the different brands and models to be incorporated in the oral cavity model to be manufactured. Subsequently, and with the help of the corresponding software, the digitally integrated implants are observed in the image of the scanned oral cavity model 200 with the implants and dental pieces as shown in Figure 2. Said figure also shows implants 210 digitally represented by approximately cylindrical pieces, with an upper part representing the connection with the implant and the lower area representing the internal orifice or channel, which will be performed in the oral cavity model during the manufacturing stage. Figure 3 shows a side view of the scan 200 of the representations of the implants 210 in dental pieces 15 and 17, and specifically it shows the upper part of the representation of the implant connection 201, followed by the representation of the implant body 203 and the representation of the lower part depicting the internal channel 202 to be performed in the oral cavity model 200 once it has been printed or manufactured. Figure 4 is similar to the previous image but showing the implant 210 in dental piece 21. In these figures a cylindrical body 203 representing the implant connection 201 can be seen below the upper part, said cylindrical body 203 representing the implant body or the thread performed in the internal channel 202 of the oral cavity model 200, to which a fastening screw will be coupled.

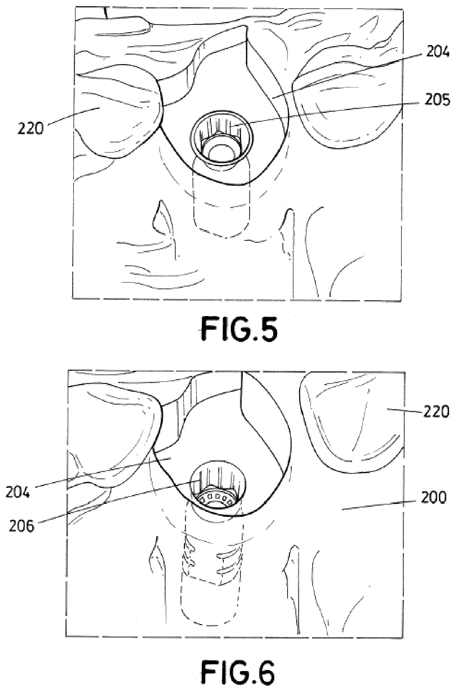

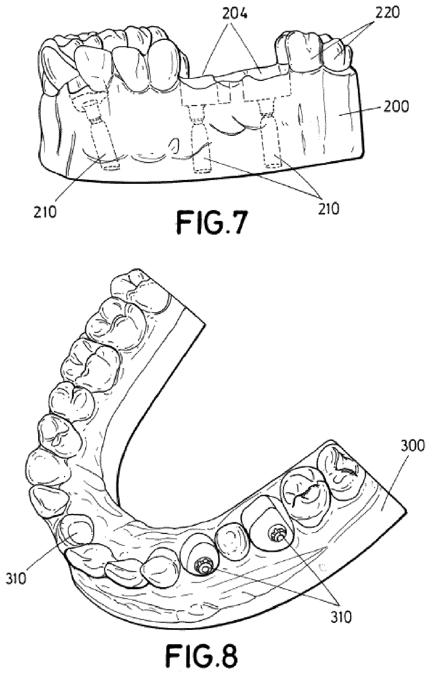

Figure 5 shows a top perspective view of the oral cavity model 200 with the digital representation of the implant connection 205 on the surface of the platform 204 of the oral cavity model 200. Similarly, Figure 6 shows a digital representation of another implant connection 206, which in this case is located below the platform 204 of the oral cavity model 200. Figure 7 shows a side perspective view of another digital representation of the oral cavity model 200 with the implant connections 210 that will be incorporated into the oral cavity model during the manufacturing thereof, either by 3D printing, milling or sintering.

Subsequently, after obtaining the digital file of the patient's oral situation and the digital design of the oral cavity model by means of a suitable computer program that determines the type of connection of the patient's dental implant and an internal channel that corresponds to the position of the implant in the patent's mouth, the oral cavity model is manufactured.

Said manufacturing of the oral cavity model 300 is preferably carried out by means of 3D printing, milling and/or sintering comprising the manufacturing of the implant connection 310 in the oral cavity model 300 as well as that of the internal channel such that the longitudinal axis of said internal channel coincides with the longitudinal axis of the patient's dental implant. Figure 8 shows an oral cavity model 300 manufactured by 3D printing in which the gaps for placing the dental pieces on the implant connections 310 integrated into the oral cavity model 300 itself can be seen.

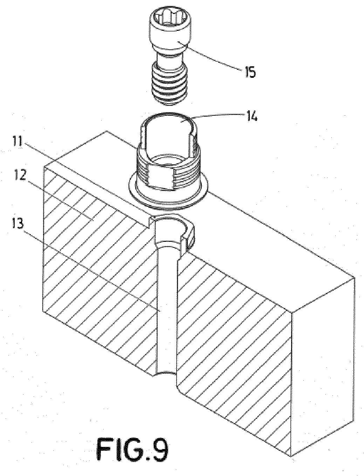

Figures 9 to 12 reproduce the different examples of oral cavity models according to the present invention with a dental implant connection and an internal channel. The internal channel incorporates an internal thread for the subsequent threading of a dental attachment 14 into the oral cavity model. Said dental attachment will be adjusted on the connection manufactured in the dental model itself and subsequently will be screwed to the internal thread incorporated in the internal channel.

Two preferred embodiments of the internal channel thread in a printed oral cavity model are proposed. Currently, 3D printing machines do not provide enough printing layers to generate accurate metrics between Ø1 mm to 03mm. Due to the current limitation of 3D printers and because the oral cavity model requires an internal thread to screw the attachment, the internal thread of the implant connection will depend on the implementation process.

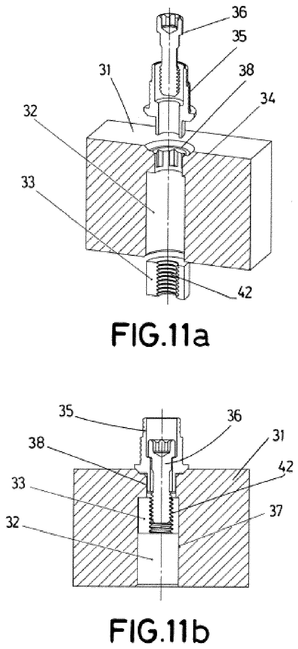

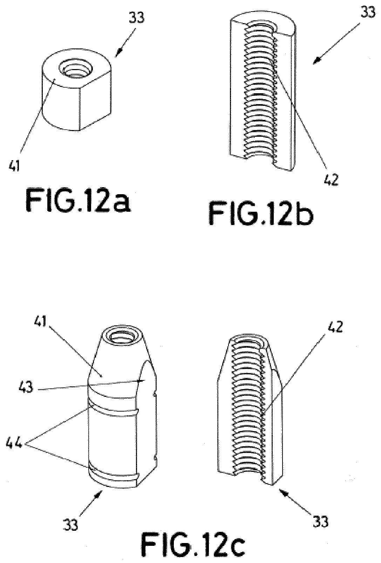

In a first embodiment, according to Figures 11a and 11b, during the manufacturing process by 3D printing, sintering and/or milling of the oral cavity model 31, in addition to the dental implant connection 38, a through orifice or channel 32 is incorporated, enabling the insertion of a retaining body 33 (Figures 12 a to 12c) from the lower end of the orifice or channel 32. The external geometry 41 of said body 33 adapts to the internal geometry 37 of the internal channel 32 of the oral cavity model 31. This retaining body 33 has a complementary geometry to that of the channel or orifice 32 of the oral cavity model 31. It preferably has a prismatic, cylindrical or cylindrical-conical geometry and may or may not incorporate two or more flaps or grooves 44 for fastening thereof to the internal channel 32 and it also may or may not incorporate flat faces 43 for anti-rotation thereof. The internal geometry of the retaining body 33 incorporates the internal thread 42, enabling adjustment of the attachment 35 to the dental implant connection 38 of the oral cavity model 31, thus carrying out the function of the implant thread 42 where the fastening screw 36 of the attachment 35 is threaded.

Similarly, the channel 32 of the oral cavity model 31, which is obviously complementary to the geometry of the outer surface of the retaining body 33, incorporates a flat, inclined or curved surface 34 that limits the depth (Z axis) at which the retaining body 33 can be inserted. In order to position the oral cavity model with respect to the XY plane, one or more cuts 44 may or may not be carried out on the outer surface of the retaining body.

The internal orifice or channel 32 of the oral cavity model 31 is determined in this case by a CAD library, such that the diameter determined by the CAD library for the internal orifice or channel 32 will be greater than the outer diameter of the retaining body 33 so that the latter can be introduced into the internal channel or orifice 32.

Figures 1 to 8 represent the use of this first embodiment, shown in Figures 11 and 12, in the design of the oral cavity model, the retaining body 33 being represented by element 203 of Figures 1 to 8. In any case, said element 203 could also represent a thread performed in the internal channel 202 of the oral cavity model or the digitalization thereof, or any of the alternatives for retaining a dental structure in an implant.

Optionally, in an embodiment not shown, the outer surface of the retaining body may comprise an external thread, complementary to a thread performed in the lower section of the internal channel of the oral cavity model but opposite the internal thread of the retaining body itself.

In a second embodiment, according to Figure 9, the oral cavity model 12 with a dental implant connection 11 has a cylindrical-shaped orifice or channel 13 with a smaller diameter than the metrics of the dental thread. Thus, once the oral cavity model 12 is printed with the connection 11 and the internal channel 13, a thread can be incorporated into said internal channel. A dental attachment 14 is connected on said connection 11 for the subsequent fastening thereof by means of a screw 15 to the thread to be carried out in the internal channel 13.

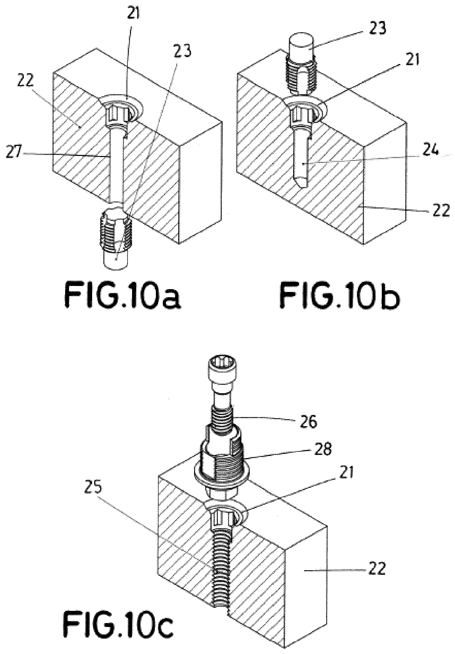

In order to generate the internal female thread 25 in the channel or orifice 13 of the oral cavity model 22, according to Figures 10a to 10c, a threading tool 23, preferably a tap 23, is inserted once the oral cavity model 22 has been manufactured, preferably by 3D printing, but also by sintering or milling. The tap 23 can be inserted from the upper or lower end of the channel or orifice depending on whether it is a blind 24 (Figure 10b) or through 27 hole (Figure 10a), respectively. The metrics and the depth (Z axis) of the beginning and end of the thread 25 depend on the compatibility of the implant, i.e., it depends on the patient's implant, since the screws 26 that join the attachment 28 and the implant are different depending on the manufacturer, with different metrics and lengths, reason for which the thread 25 will depend on the length and metrics of the screw 26. The beginning of the thread will be given by the CAD library, i.e., by the type of connection 21 that varies depending on the manufacturer and model of the implant, which is important for the insertion of the screw 26 of the attachment 28. The end of the thread may or may not be a through hole since it is not a determining factor when screwing onto the three-dimensional oral cavity model 22.

For example, in one manufacturer's implant, the implant connection thread is located on the surface or platform of the oral cavity model whereas in another manufacturer's implant the thread starts at a certain distance, for example 1.8 mm, from the beginning of the same platform. This is why thread values are defined in the corresponding CAD library.

In a third embodiment, the internal thread of the internal orifice is manufactured during 3D printing of the oral cavity model.

As mentioned above, once the oral cavity model 22 has been carried out, the attachment 28 is supported on the connection 21 of the oral cavity model 22 and the thread 25 is generated in the oral cavity model 22 with the tap 23, enabling said attachment 28 to be screwed into the oral cavity model 22 with a screw 26.

If the oral cavity model is manufactured by milling, the thread of the internal channel of the model is carried out by means of threading tools incorporated in the milling machines.

Alternatively, in another embodiment not shown, the oral cavity model incorporates the implant connection but does not have an internal orifice or channel such that once the oral cavity model has been manufactured, the internal orifice or channel and the thread inside said channel will be generated by means of manual tools.

## Claims

1. An oral cavity model manufactured by means of 3D printing, milling and/or sintering and that reproduces an oral situation of a patient with at least one dental implant, **characterized in that** it comprises at least one implant connection integrated into the body itself of the oral cavity model.

2. The oral cavity model according to claim 1, **characterized in that** it comprises an internal channel with:
- an upper end with the implant connection, and
- a lower section located after the upper end.

3. The oral cavity model according to claim 2, **characterized in that** the lower section comprises an internal thread.

4. The oral cavity model according to any of the preceding claims, **characterized in that** it comprises a retaining body located in the lower section of the channel, said body having internal thread and an outer surface with a geometry complementary to that of the internal channel.

5. The oral cavity model according to claim 4, **characterized in that** the retaining body comprises, on the outer surface thereof, at least one notch, groove and/or flange (44) that acts as a mechanical retaining element inside the internal channel.

6. The oral cavity model according to any of claims 4 or 5, **characterized in that** the retaining body comprises at least one cut (43) on the outer surface thereof, perpendicular to the longitudinal axis of the internal channel for limiting the rotation of the retaining body inside the channel.

7. A retaining body for an oral cavity model according to any of claims 1 to 6, **characterized in that** it comprises an outer surface with a geometry complementary to the geometry of the internal channel and an orifice with an internal thread that is coaxial with the axis of the internal channel.

8. Manufacturing method of an oral cavity model that reproduces the oral situation of a patient with at least one dental implant, **characterized in that** it is obtained by means of the following stages:
- Obtaining a digital file of the patient's oral situation,
- Digitally designing the oral cavity model by means of a suitable computer program that comprises determining the connection of the patient's dental implant and an internal channel that corresponds to the position of said implant in the patient's mouth,
- Manufacturing the oral cavity model by means of 3D printing, milling and/or sintering, which includes the integration of the implant connection in the same stage as the manufacturing of the oral cavity model.
- Carrying out the internal channel with the longitudinal axis thereof coinciding with the longitudinal axis of the patient's dental implant, and
- Incorporating an internal thread in the internal channel for the subsequent threading of a dental attachment in the oral cavity model.

9. The method according to claim 8, **characterized in that** internal channel is carried out during the manufacturing stage of the oral cavity model.

10. The method according to claim 9, **characterized in that** internal channel is carried out after the manufacturing stage of the oral cavity model with manual tools.

11. The method according to any of claims 8 or 9, **characterized in that** incorporating the internal thread into the internal channel is carried out by means of 3D printing, milling and/or sintering during the manufacturing process itself of the oral cavity model.

12. The method according to any of claims 8 to 11, **characterized in that** incorporating the internal thread is carried out by introducing a threading tool into the internal channel.

13. Method according to any of claims 8 to 10, **characterized in that** incorporating the internal thread is carried out by introducing, into the internal channel, a retaining body with an outer surface having a geometry complementary to the geometry of the internal channel and having an orifice with an internal thread that is coaxial to the internal channel, thus determining the internal thread of the oral cavity model.
